(19) Europäisches Patentamt / European Patent Office / Office européen des brevets

(11) **EP 4 417 391 A1**

(12) **EUROPEAN PATENT APPLICATION**

(43) Date of publication:
**21.08.2024 Bulletin 2024/34**

(21) Application number: **23157344.5**

(22) Date of filing: **17.02.2023**

(51) International Patent Classification (IPC):
***B29C 45/40*** (2006.01)

(52) Cooperative Patent Classification (CPC):
**B29C 45/40; B29C 45/4005; B29C 45/401;**
B29C 2045/4021; B29C 2045/4057

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Airbus Operations GmbH
21129 Hamburg (DE)**

(72) Inventors:
• **Stroh, Pascal Ansgar
21129 Hamburg (DE)**
• **Marquard, Felix
21129 Hamburg (DE)**

(54) **MOULD OF A FORMING TOOL, FORMING TOOL AND METHOD**

(57)     Disclosed are a mould of a forming tool, in particular for a forming tool capable to be used for resin transfer moulding processes or injecting moulding processes, wherein an inner surface of the mould which (the inner surface) is adapted to limit on one side a forming tool cavity for a product to be fabricated has an integral surface section which is adapted be moved relatively to adjacent surface areas in a demoulding direction, forming tool having such a mould and a method for demoulding, wherein an integral inner surface section acts as membrane and is moved inside the cavity to push the product out of the mould.

Fig. 4b:

4

A-A

**Description**

The present invention concerns a mould of a forming tool, in particular for a forming tool capable to be used for resin transfer moulding processes or for injection moulding processes according to the preamble of claim 1, such a forming tool and a method for demoulding, in particular for demoulding a fabricated product from a mould of a forming tool.

Knowing forming tools for resin transfer moulding processes (RTM) or for injection moulding processes comprise in general a lower mould and an upper mould. The moulds define a cavity prepared for receiving a product to be produced. In order to put parts such as preforms which are needed for the fabrication of the product in the cavity and in order to release the fabricated product out of the cavity, the cavity can be opened by lifted up the upper mould from the lower mould. For demoulding, in particular to overcome (loose) any adhesion between the lower mould and the fabricated product, at least one ejector means is provided in the lower mould. As shown in DE 10 2011 050 976 A1, the ejector means comprises a plurality of metallic pistons which can be moved upwards so that the fabricated product is lifted up and thus pushed of the lower mould. The pistons are positioned in holes of the lower mould in such a way that their front surfaces form a surface section of an inner surface of the lower mould that defines a bottom of the cavity. In a retracted state their front surfaces are flush with adjacent surface areas of the inner surface. In order to avoid any turning of the pistons in the holes, they are locked against turning.

DE 10 2013 207 668 A1 shows forming tool whose at least one metallic ejector piston is guided in a ventilation hole of a lower mould. The ventilation hole is opened to an inner surface of the lower mould and connected to a ventilation line. By moving the piston, a fabricated product can be lifted and in addition, the piston can be used for blocking the ventilation line.

In order to avoid that resin gets between the retracted piston and the tool, the pistons are sealed. With low-viscous resin a small amount of resin will always pass this sealing and over time the piston will get stuck due to cured resin leftovers.

In DE 10 2014 005 629 B4 a forming tool is shown using an elastomeric membrane that is inserted into the lower mould. However, the transitions from the membrane to the lower mould can create an unavoidable bead in the product which prevents production of a so-called class A surface. In addition, an elastomer has a worse and uneven thermal conductivity compared to metallic ejector means.

It is an object of the present invention to provide a simplified alternative mould of a forming tool, in particular for a forming tool capable to be used for resin transfer moulding processes or for injection moulding processes, to propose an improved forming tool and to propose an improved method for demoulding.

The object is achieved by a mould with the features of claim 1, by a forming with the features of claim 9 and by a method with the features of claim 9. Advantageous embodiments are disclosed in the dependent claims, the description and the figures.

According to the invention, a mould of a forming tool, in particular for a forming tool capable to be used for resin transfer moulding processes or injecting moulding processes, is provided. The mould is adapted to act together with another mould of the forming tool in order to form a cavity for a product to be fabricated, wherein by its inner surface the mould limits on one side the cavity. The inner surface of the mould has an integral surface section which is adapted be moved relatively to adjacent surface areas in a demoulding direction.

If the inventive mould is a lower mould of the forming tool, the mould is adapted to form a bottom of the cavity by its inner surface. If the inventive mould is an upper mould, the mould is adapted to form a ceiling of the cavity by its inner surface. The integral surface section is not a separate part that has been produced separately from the mould and connected to it later after its production. The integral, preferable seamless transition between the movable surface section and the surrounding inner surface areas avoids any beading or surface unevenness. Looking at the inner surface of the mould from the top, the integral surface section is basically not visible. Thus, the production of a Class A surface is possible. In addition, thermal problems do not occur as the movable surface section and the surrounding inner surface areas consists of the same material. In particular, the inventive mould can be implemented in large forming tools for the production of fibre reinforced plastics using low viscous resin enabling a class A surface without markings due to the inventive demoulding. However, the inventive mould is not limited to any size of a forming tool. It can also be used for small or middle-sized forming tools.

Preferably, the integral surface section is material reduced compared to the adjacent surface areas in demoulding direction. The surface section acts as a metallic membrane that is thin enough to show elastic behaviour. For instance, when the surface section has a rectangular shape with the dimensions of 1mm $\times$ 208mm $\times$ 104mm (thickness $\times$ long_side $\times$ short_side) and consists of metal (steel), it can roughly be lifted elastically up to 6,5mm, without showing any plastic deformation. It is noted that the shape of the surface section is not limited to a rectangular shape. Alternative shapes such as circular shapes, oval shape, star shape etc are also applicable. Preferably, the shape of the surface section is orientated to the shape of the mould.

In order to avoid any bending in a counter direction of the surface section due to stress caused by injection pressure during processing of the product, a support element can be provided under the surface section in order to support the surface section during processing. Otherwise the surface section could deform in the counter direction and the mould couldn't maintain its designated geometry. Preferably, the support element has the same size as a pocket under the surface section, which was created by removing the material in order to create the surface section (membrane). Thus, in a not detached state, the surface section rests with its entire extension on the support element. In addition, it is preferred if the support element and the integral surface are made from the same metallic material, thus a material's behaviour with respect to heat transfer is as uniform as possible.

Preferably, the integral surface section (membrane) is moved in demoulding direction by at least one ejector means. In order to position the ejector means, for instance a piston, a recess can be provided in the support element. The ejector means can be driven hydraulically, pneumatically or mechanically, for instance. Thus, the support element fulfils two main functions: First, it supports the thin surface section during processing, and second, it houses and guides the at least one ejector means. Alternatively, the support element itself can be moved in demoulding direction and thus acting as ejector means. In its retracted state, the ejector means is flush with a support surface of the support element. When the ejector means is actuated in demoulding direction, it pushes against the surface section (membrane). As a consequence of the demoulding stroke, the metal membrane deforms elastically and pushes the product out of the mould to such an extent that any adhesive connection to the inner surface of the mould surface is detached and demoulding is facilitated. In one example, the at least ejector means can be moved about 5-6mm in demoulding direction. In general, the maximum demoulding stroke depends on the thickness, the size and the shape of the surface section. In addition, the maximum stroke is influenced by the position of the ejector means in relation to the surface section, that means where the ejector means contacts the surface section from the back.

In order to distribute evenly the pressure force (force needed to move the surface section in the demoulding direction), it is preferred if the upper recess is positioned in such a manner in the support element that it can be positioned in the middle (centre) of the surface section. If only one support element is provided in the mould, the surface section is positioned in the middle (centre) of the inner surface of the mould. If a plurality of surface sections is provided, they are distributed evenly over the entire inner surface of the mould.

The at least one ejector means needs energy to be activated. Thus, supply lines, for instance a hydraulic line, are provided. Therefore, it is preferred if the support element has in addition to at least one support portion at least one supply portion. The supply portion provides internally all required supply lines. The required supply lines extend between the upper recess in the support portion and an outer supply connection area (coupling area) of the supply element.

In order to position the support element adequately in the mould, in a bottom side of the mould a recess can be provided. The recess is adapted to receive the supply portion of the support element and has the same or almost the same length as the supply portion, so that the outer supply connection area is at least almost flush with a side wall of the mould. By means of this, no supply lines are needed in the mould itself as all required supply lines for the at least ejector means run through the support element. In particular, in the unlikely event of a damage of the coupling between the connection area and an external coupling member, the coupling can be easily repaired as it accessible from the outside. However, it is also possible to provide the connecting area at the support portion. In such a case, pipes or tubes could be used as necessary supply lines.

According to the invention, a forming tool in particular a forming tool capable to be used for resin transfer moulding processes or injecting moulding processes comprises an inventive mould.

The forming tool can be used for the production of fibre reinforced plastics using low viscous resin enabling a class A surface without markings due to the demoulding technology, for instance.

According to the invention, a method for demoulding, in particular for detaching a fabricated product out of a mould of a forming tool, in particular a forming tool capable to be used for resin transfer moulding processes or injecting moulding processes, wherein an inner surface of the mould limits on one side a cavity in which the product is fabricated, comprises the step that an integral surface section of the inner surface of the mould is moved relatively to adjacent surface areas in demoulding direction by a force acting from the back on the integral surface section.

The method takes advantage of the fact that even a metallic surface section can be deformed elastically if it has a membrane-line thickness. Thereby, the elastic character depends on the thickness, the material and the size of the surface section. The method can be implemented in large as well as in small and medium forming tools for the production of fibre reinforced plastics using low viscous resin enabling a class A surface without markings due to the inventive demoulding. It is used at the end of a RTM production process when the product needs to be pushed out of the mould.

In what follows, a preferred embodiment of the present invention is explained with respect to the accompanying drawings. As is to be understood, the various elements, components and geometrical structures are depicted as examples only, may be facultative and/or combined on a manner different than depicted. Reference signs for related elements are used comprehensively and not defined again for each figure. Shown is schematically in

Figure 1:       explosive of an exemplary forming tool according to the invention;
Figure 2:       a perspective view of an inventive support element;

Figure 3:            a perspective view of an inventive ejector piston;
Figures 4a and 4b:   detailed views of an inventive mould shown in figure 1;
Figures 5a and 5b:   detailed views of the support element shown in figure 2;
Figures 6:           a cross-section of the assembled mould; and
Figures 7a and 7b:   detailed views of the ejector piston shown in figure 3;

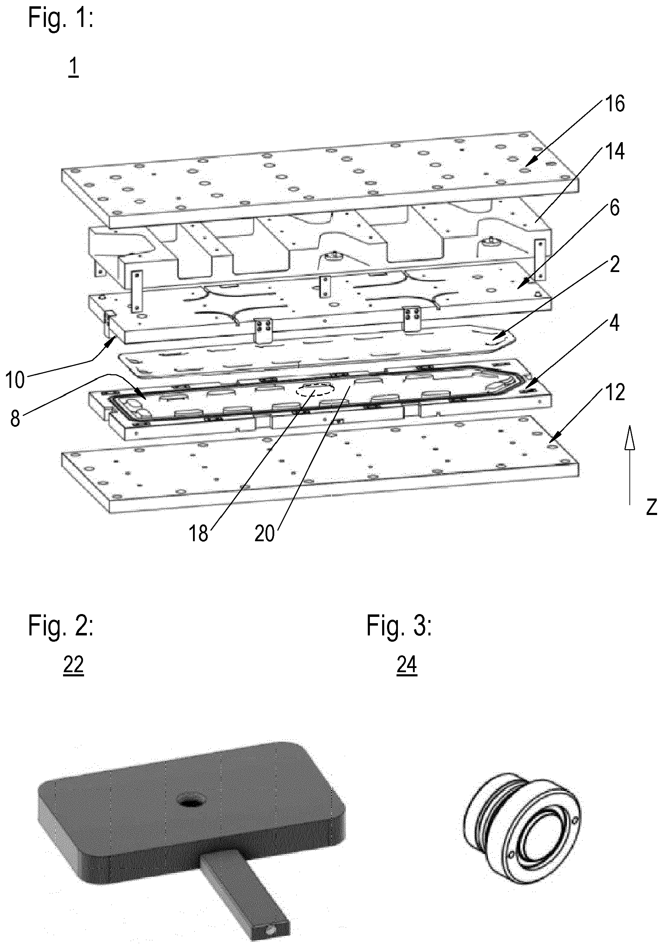

In figure 1 a preferred embodiment of an inventive forming tool 1 is shown. The forming tool 1 can be used for the production of fibre reinforced plastics using low viscous resin enabling a class A surface without markings due to the inventive demoulding technology. An exemplary production method is resin transfer moulding (RTM).

The forming tool 1 comprises at least an inventive lower mould 4 that acts together with an upper mould 6. Both moulds 4, 6 are orientated horizontally (in general) and define a cavity in which the product 2 is fabricated. In the shown embodiment, the product 2 is a spineboard.

The cavity is limited by inner surfaces 8, 10 of the lower mould 2 and the upper mould 4. The inner surfaces 8, 10 are facing each other so that the inner surface 8 of the lower mould 4 forms a bottom of the cavity and the inner surface 10 of the upper mould 6 forms a ceiling of the cavity. The cavity can be opened and closed by moving the upper mould 6 upwards in vertical direction.

Further on, in the shown embodiment the forming tool 1 has a lower base plate 12, a sprue block 14, and an upper base plate 16. The positioning and usage of these elements are common, so that a detailed description can be omitted. Further on, the forming tool 1, in particular their elements (4, 6, 12, 14, 16) comprise known supply lines such as, resin injection lines, evacuation lines, ventilation lines, sealings, etc. which are necessary for RTM-processing.

According to the invention the inner surface 8 of the lower mould 4 has an integral surface section 18 which is adapted be moved relatively to adjacent surface areas 20 in a demoulding direction z, which is in the shown embodiment in vertical direction from bottom to top. In figure 1, the integral surface section 18 is highlighted by a dash circle, as it is not visible from the top. In the following the term "lifting direction z" is also used for "demoulding direction z". By means of pushing the integral surface section 18 upwards, any adhesion between the fabricated product 2 and the inner surface 8 is released such that the fabricated product 2 can be taken out easily of the opened cavity from the lower mould 4. If the inventive mould is the upper mould 6, the term "lifting direction z" will also be adequate, as then the demoulding movement of the product 2 will show away from the inner surface 10 of the upper mould 6, in particular downwards, so that the product 2 will be "lifted down" and pushed out of the upper mould 6.

Below the integral surface section 18, a support element 22, shown in figure 2, is positioned. The support element 22 acts as a rest block and avoids any deformation of the integral surface section 18 caused by stress and pressure acting on the product 2 during fabrication. In addition, the support element 22 houses an ejector piston 24 shown in figure 3.

The ejector piston 24 is adapted to push the integral surface section 18 in lifting direction z during demoulding.

The integral surface section 18, the support element 22 and the piston 24 will be described in more detailed in the following figures.

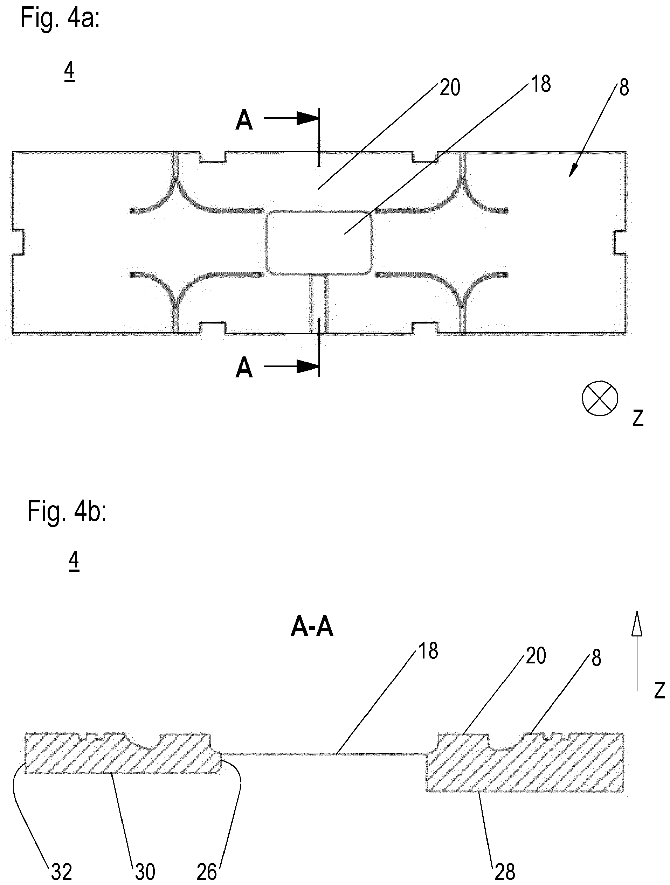

As exemplary shown in the bottom view of the lower mould 4 according to figure 4a and in the cross-section according to figure 4b, the integral surface section 18 has a rectangular shape. It is positioned in the middle of the lower mould 4 so that lifting forces are acting evenly on the product 2 to be demoulded.

The integral surface section 18 is made by material reduction of the lower mould 4 such that a pocket 26 is established which is opened to the bottom side 28 (outer surface which is opposite to the inner surface 8) of the lower mould 4 but closed to upper side (inner surface 8) of the lower mould 4 by the surface sections 18. In a preferred embodiment, when the lower mould 4 is metallic, the material reduction can be released by milling.

The surface section 18 is integrally formed with the surrounding areas 20 of the inner surface 8. This means that the surface section 18 is seamless integrated into the inner surface 8. Looking form above on the lower mould 4, the surface section 18 cannot be seen due to their seamless integration. The surface section 18 consists of the same material as the surrounding surfaces 20. The only difference between the surface section 18 and the surrounding surface areas 20 is that the surface section 18 is material reduced from the back in such a manner that it (the surface section 18) shows elastics characteristics enabling its lifting up relatively to the rigid surrounding surface areas 20. In other words, the integral surface section 18 forms an elastic (flexible), seamless integrated membrane that consists of the same material as its surrounding surface areas 20.

It is important that the membrane 18 deforms only on an elastic basis of the metal when the ejector piston 24 executes a lifting stroke (demoulding stroke). During the lifting stroke, the surface section 18 only stretches to that extend that the elasticity remains securely within its elastic range.

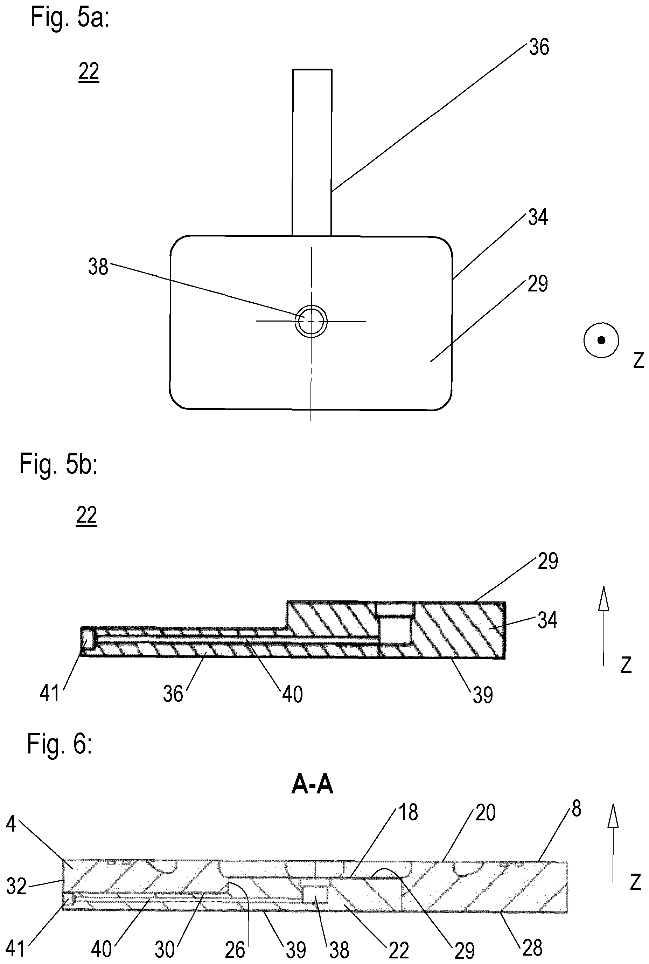

The maximum lifting stroke, which is the lifting stroke after which plastic deformation of the surface section 18 occurs, can be calculated by Hooke's calculation $\varepsilon = \dfrac{\sigma}{E}$ , and the Thereom of Pythagoras $a^2 + b^2 = c^2$ . In order to

avoid than any plastic deformation of the surface section 18, it is recommended to select an ejector piston 24 having a smaller maximum lifting stroke if positioned in the support element 22 and measured from surface 29 (support surface of the support element 22, shown in figures 5a, 5b and 6) on which the surface section 18 rests during fabrication.

In addition, in the bottom side 28 of the lower mould 4 a channel 30 is provided. The channel 30 is opened at its ends and over its entire length to the bottom side 28. It extends between the pocket 26 and a side wall 32 of the lower mould 4.

The channel 30 has a straight shape and has a smaller height than the pocket 26. It is a kind of straight recess which can be manufactured by milling as well.

In figures 5a and 5b the exemplary support element 22 is shown in more detail. Preferably, the support element 22 is made of the same material as the lower mould 4. It has a support portion 34 and a supply portion 36. The support portion 34 provides the support surface 29 and has a rectangular shape. In particular, the dimensions are such that it fits perfectly in the pocket 26 of the lower mould 4 (see figure 6). That means, the surface section 18 is fully supported by the support portion 34 during fabrication so that any deformation of the surface section 18 to the underside of the lower mould 4 caused by stress or pressure acting on the product 2 is prevented. The height of the support element 22 is equal to the height of the lower pocket 26, so that height compensation is not necessary if the support element 18 is introduced and the lower mould 4 rests on the lower base plate 12.

In the middle of the support surface 29 of the support portion 34 an upper recess 38 is provided. The upper recess 38 is used for housing and guiding the ejector piston 24. The upper recess 38 has a circular shape that correspondence to the outer shape of the ejector piston 24. It is opened to the support surface 29 and at its bottom opened to a supply line 40. As the upper recess 38 is positioned in the middle of the support surface 29, the ejector piston 24 will be positioned in the middle (centre) of the surface section 18 so that a lifting force is distributed evenly over the surface section 18. If as in the shown embodiment the surface section 18 is in the middle of the lower mould 4, the lifting force will be distributed not only evenly with respect to the surface section 18, but also with respect to the entire product 2.

The supply portion 36 of the support element 22 has a longitudinal arm-like shape. Looking from the side, both portions 34, 36 has the same bottom line 39, whereas the supply portion 36 has a smaller height than the support portion 34. The shape of the supply portion 36 corresponds to the shape of the channel 30 so that it fits perfectly in it (see figure 6). In particular both the supply portion 36 and the channel 30 has almost the same length.

The supply portion 36 provides the at least one supply line 40 that extends from the upper recess 38 to an outer connection area 41 in order to connect the at least one supply line to an energy source. If the ejector piston 24 is a hydraulic piston, for instance, the at least supply line 40 is used to feed hydraulic oil provided by an hydraulic system to the ejector piston 24 in order to lift the surface section 18 and to return the hydraulic oil back to the hydraulic system.

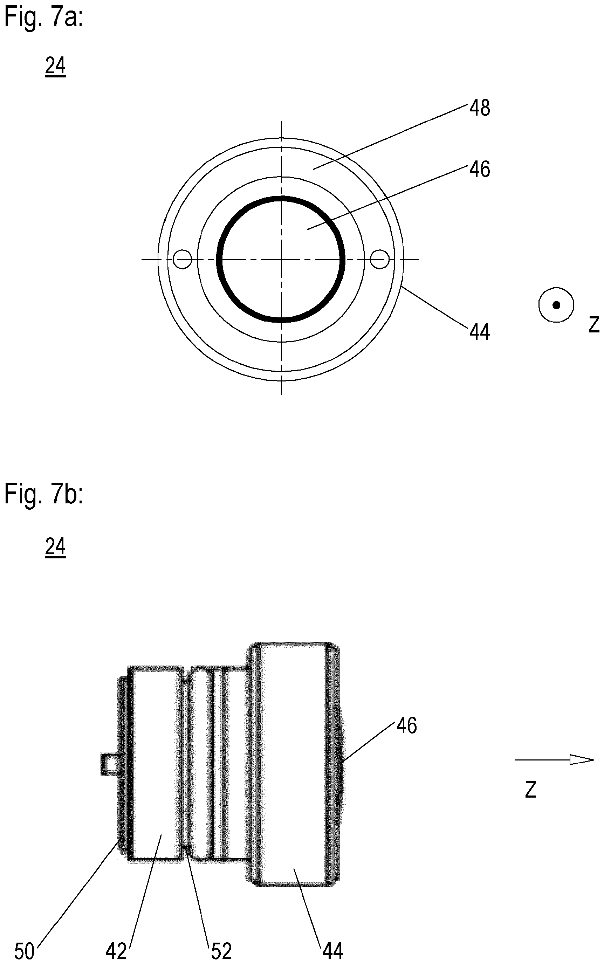

In figures 7a and 7b an exemplary ejector piston 24 is shown. The piston has basically a cylindrical shape with a shaft 42 and a head 44 which is radially enlarged compared to the shaft 42. Its outer shape fits perfectly to the upper recess 38 of the support portion 34 of the support element 22. In order to optimise the transmission of the lifting force into the integral surface section 18, the front of the head 44 has a middle surface 46 which is slightly convexed outward and surrounded by a flat annular surface 48.

The ejector piston 24 is pushed upwards by the hydraulic pressure acting on its back side 50. In order to avoid any leakage, at least one not shown seal ring is inserted in an annular groove 52 of the shaft 42.

According to an inventive method, in order to demould a fabricated product 2, the integral surface section 18 of the inner surface 8 of the lower mould 4 is moved relatively to the adjacent surface areas 20 in lifting direction by a lifting force acting from below on the integral surface section 18. The lifting force and in particular the stroke is applied in such a manner that the integral surface section 18 deforms only elastically, so that after the stroke is terminated, the surface section 18 goes back in its initial position, where it in surface contact with the support portion 34 of the support element 22.

Disclosed are a mould of a forming tool, in particular for a forming tool capable to be used for resin transfer moulding processes or injecting moulding processes, wherein an inner surface of the mould which (the inner surface) is adapted to limit on one side a forming tool cavity for a product to be fabricated has an integral surface section which is adapted be moved relatively to adjacent surface areas in a demoulding direction, forming tool having such a mould and a method for demoulding, wherein an integral inner surface section acts as membrane and is moved inside the cavity to push the product out of the mould.

References

1      forming tool
2      product
4      lower mould

6 upper mould
8 inner surface of the lower mould
10 inner surface of the upper mould
12 lower base plate
14 sprue block
16 upper base plate
18 integral surface section (membrane)
20 adjacent / surrounding surface areas
22 support element
24 ejector piston
26 pocket
28 bottom side
29 support surface
30 channel
32 side wall of the lower mould
34 support portion
36 supply portion
38 upper recess
39 bottom line
40 supply line
41 outer connection area
42 shaft
44 head
46 middle surface
48 annular surface
50 back side
52 annular groove

z demoulding / lifting direction

**Claims**

1. Mould (4) of a forming tool (1), in particular for a forming tool capable to be used for resin transfer moulding processes or injecting moulding processes,
   wherein

   • the mould (4) is adapted to act together with another mould (6) of the forming tool (1) in order to form a cavity for a product (2) to be fabricated,
   and wherein
   • the mould (4) limits on one side the cavity by its inner surface(8),
   **characterised in that**
   • the inner surface (8) has an integral surface section (18) which is adapted be moved relatively to adjacent surface areas (20) in a demoulding direction (z).

2. Mould according to claim 1, wherein in the demoulding direction (z) the surface section (18) is material reduced compared to the adjacent surface areas (20).

3. Mould according to claim 1 or 2, wherein a support element (22) is provided adapted to be positioned under the surface section (18) in order to support the surface section (18) during processing.

4. Mould according to claim 3, wherein the support element (22) has an upper recess (38) for an ejector means (24).

5. Mould according to claim 4, wherein the upper recess (38) is positioned such in the support element (22) that it can be positioned in the middle of the surface section (6).

6. Mould according to claims 4 or 5, wherein the support element (22) has at least one support portion (34) and at least one supply portion (36), which is material reduced compart to the support portion (34) and in which all required supply lines (40) are provided internally extending between the upper recess (38) in the support portion (34) and an outer supply connection area (4) of the support element (22).

7. Mould according to claim 6, wherein in the mould (4) a channel (30) is provided adapted to receive the supply portion (36) of the support element (22) and having the same or almost the same length as the supply portion (36).

8. Forming tool (1), in particular a forming tool (1) capable to be used for resin transfer moulding processes or injecting moulding processes, comprising a mould (4) according to any of the preceding claims 1 to 8.

9. Method for demoulding, in particular for demoulding a fabricated product (2) from a mould (4) of a forming tool (1), in particular a forming tool capable to be used for resin transfer moulding processes or injecting moulding processes, wherein an inner surface (6) of the mould (4) limits on one side a cavity in which the product (2) is fabricated, comprising the step:

   • moving an integral surface section (18) of the inner surface (8) of the mould (4) relatively to adjacent surface areas (20) in demoulding direction (z) by a force acting from the back on the integral surface section (18).

Fig. 1:

<u>1</u>

Z

Fig. 2:

<u>22</u>

Fig. 3:

<u>24</u>

Fig. 4a:

4

20   18   8

A →

A →

⊗ Z

Fig. 4b:

4

**A-A**

18   20   8

↑ Z

32   30   26   28

Fig. 5a:

_22_

36

38

34

29

Z

Fig. 5b:

_22_

29

34

41   36      40        39

Z

Fig. 6:

**A-A**

18   20   8

4

32

41   40   30   26   39   38   22   29   28

Z

Fig. 7a:

24

48

46

44

Z

Fig. 7b:

24

46

50 42 52 44

Z

Europäisches
Patentamt

European
Patent Office

Office européen
des brevets

# EUROPEAN SEARCH REPORT

Application Number

EP 23 15 7344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 016 824 A1 (SNECMA [FR]) 31 July 2015 (2015-07-31) * 222, 225 * | 1-5 | INV. B29C45/40 |
| A | FR 2 846 592 A1 (DUVAL JEAN PIERRE [FR]) 7 May 2004 (2004-05-07) * . * | 1-8 | |

TECHNICAL FIELDS
SEARCHED (IPC)

B29C

The present search report has been drawn up for all claims

| Place of search | Date of completion of the search | Examiner |
|---|---|---|
| Munich | 10 July 2023 | Tonelli, Enrico |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

EP 4 417 391 A1

## ANNEX TO THE EUROPEAN SEARCH REPORT
## ON EUROPEAN PATENT APPLICATION NO.

EP 23 15 7344

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2023

| Patent document cited in search report | | Publication date | Patent family member(s) | Publication date |
|---|---|---|---|---|
| FR 3016824 | A1 | 31-07-2015 | NONE | |
| FR 2846592 | A1 | 07-05-2004 | NONE | |

EPO FORM P0459

For more details about this annex : see Official Journal of the European Patent Office, No. 12/82

**EP 4 417 391 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011050976 A1
- DE 102013207668 A1
- DE 102014005629 B4